# EUROPEAN PATENT APPLICATION

(11) **EP 1 514 499 A1**
(43) Date of publication of application: **16.03.2005**
(21) Application number: 04021427.2
(22) Date of filing: 09.09.2004
(51) Int. Cl.: A47G 27/04, E04F 15/02

(54) **Flat decorative element and method for making it**

(30) Priority: 09.09.2003 EP 03425585
(71) Applicant: Vagnoli, Ivano, 56024 Ponte a Egola, S. Miniato (PI) (IT)
(72) Inventor: Vagnoli, Ivano, 56024 Ponte a Egola, S. Miniato (PI) (IT)
(74) Representative: Celestino, Marco

(57) **Abstract**

A coating element (10) comprising a support (1) that during the laying steps is connected to the surface to coat, for example by means of nails, screws, glue for building industry, and a decorative element (11). In particular, the decorative element (11) can comprise only a plastic resin layer that then in use is exposed, or alternatively, a decorative layer of different material (12), for example leather, hide, brick-like material, coupled to the resin layer (11) during a process of plastic injection co-moulding. The decorative element (10) is then made coupling the decorative element (11) to the support (1) by means of cooperating means suitable for causing a mutual releasable engagement. More in detail, the cooperating means of the decorative element (11) are integrated to it during a plastic injection moulding process (40).

## Description

### Field of the invention

The present invention relates to the building industry and more precisely it relates to a flat decorative element of the type comprising a support to which is coupled the coating element actual through releasable engagement means.

Furthermore, the invention relates to a method for making this decorative element.

### Background of the invention

It is well known in the building industry to use flat decorative elements of different material for example of stone, ceramic, wood, and construction material, to coat the surfaces of indoor or outdoor spaces. A critical step of the coating process is laying the flat elements, usually made manually by expert workers, requiring a long time and then high costs.

In particular, with the fixing systems presently in use the removal of tiles is troublesome, since it is impossible not to damage them. Removal of tiles, as well as replacement of damaged tiles, can be necessary simply for coating again a surface or it may be useful to allow an easy drying of possible humidity.

For speeding up the laying steps of coating elements some solutions have been proposed, as described for example in DE 4026472. Here the use is provided of fixing to the surface to coat a fastening substrate on which then the decorative element is releasably coupled. However, even if the laying steps of the decorative elements are easier, there are high production costs owing to the complexity of the industrial technology used to provide the elements same.

Furthermore, with the known solutions existing it is not possible to provide homogeneous and uniform coating surfaces, since, the elements tends to lose their shape.

A further problem is to make heat radiating floors. In fact, laying heating ducts with the known systems is particularly complex since it requires using mortar.

### Summary of the invention

It is therefore a feature of the present invention to provide a flat decorative element that makes easier the laying steps assuring at the same time a solid fastening to the surface to coat and from which the element can be easily unfastened in a desired moment.

It is another feature of the present invention to provide such a flat decorative element structurally easy and cost effective.

It is a particular feature of the present invention to provide a method for making such a flat decorative element.

These and other features are accomplished with one exemplary coating element for surfaces, according to the present invention, comprising:
- a support suitable for being connected to the surface to coat;
- a decorative element having cooperating means that provide a mutual engagement with relative cooperating means provided on said support;
whose main feature is that the decorative element integrates the cooperating means by at least one resin layer made by plastic injection moulding.

Advantageously, the decorative element comprises a resin layer and a decorative layer, which in use is exposed, fixed to the resin layer during the same plastic injection moulding process where they are integrated to the cooperating means. The decorative layer can be made, for example of leather, hide, brick-like material, ceramics, wood, construction material.

In particular, the cooperating means comprises at least one projection and at least one recess. This way, it is possible to provide a solid fastening of the decorative element to the support and then to the surface to coat by a system that can be easily unfastened. Furthermore, this allows removing quickly the leather tile from the relative support to provide a quick change thereof in a desired moment.

Advantageously, the or each projection and the relative recess provide a mutual click engagement.

In particular, each projection comprises a base constrained to the layer of plastic resin, or to the support, and a head suitable for snap engagement with the relative recess of the support, or of the layer of plastic resin, forcing elastically the side ends.

In an exemplary embodiment of the invention, the decorative element integrates the cooperating means by providing a frame that is at least in part embedded in the resin layer during the plastic injection moulding process, (co-moulding). In this case, the frame can be made of stiff material, for example by injection moulding, so that the frame cooperating means that provide a mutual engagement with relative cooperating means provided on said support.

Advantageously, the support is made of plastic resin of elastic type. In this case, if the support has at least one recess the support and the decorative element match by forcing elastically its edge by the corresponding projection.

Alternatively, the support is made of plastic resin of stiff type. In this case, if the support has at least one recess the support and the decorative element match by snap engagement of the edge by the corresponding projection.

Advantageously, the support is equipped with at least one groove that crosses it between two side edges thereof suitable for receiving a heating means, for example an electrical resistance or a duct crossed by a heating fluid. This way, it is possible to provide a heat exchange, which is very effective owing to the high heating surface that is eventually obtained.

In particular, the support may have a portion exceeding the decorative element that it sustains. In this case, the support for decorative elements is equipped with shaped side edges, in particular bevelled, which makes easier to approach adjacent supports during the laying steps.

According to an exemplary embodiment of the invention a support for leather tiles with plastic resin injections comprises a plurality of supports as above described adjacent and operatively connected to each other in order to form a single body capable of receiving a plurality of decorative elements. In this case, the support can be easily transported after rolling it up.

Advantageously, the flat coating element comprises:
- a decorative layer in a material selected from the group of leather, stone, ceramic, wood, construction material;
- a first plastic resin layer fixed to the decorative layer;
- a second plastic resin layer fixed to the first plastic resin layer, said second plastic resin layer being of a different type from the first plastic resin layer;
- a support suitable for being connected to a surface to coat;
said support and said second plastic resin layer having cooperating means that provide a mutual engagement.

In a possible exemplary embodiment, the or each projection of the support or of the decorative element is separate from it. In particular, the or each projection can be applied to the support in a second moment, for example by a releasable coupling.

Advantageously, the decorative layer is smooth, thus assisting the removal of the decorative element from the support by a suction cap.

According to a further aspect of the invention a method to coat a surface comprises the following steps:
- applying to the surface to coat of at least one support;
- arranging on said support at least a decorative element having at least one plastic resin layer to it fastened, said support and said or each decorative element having cooperating means that provide a mutual engagement;
wherein said coating layer integrates said cooperating means in a preliminary step of plastic injection.

### Brief description of the drawings

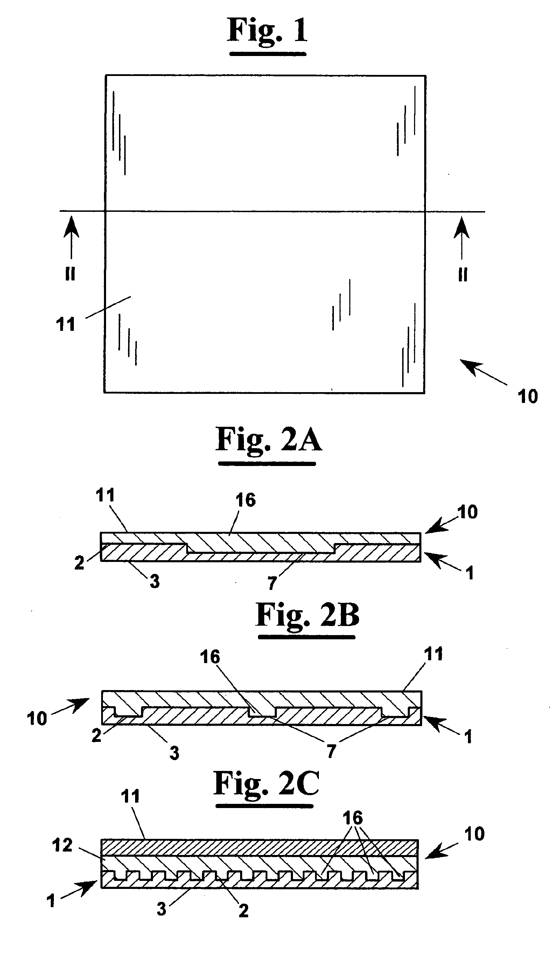

Further characteristics and the advantages of the flat decorative element, according to the invention, will be made clearer with the following description of an exemplary embodiment thereof, exemplifying but not limitative, with reference to the attached drawings, in which like reference characters designate the same or similar parts, throughout the figures of which
- figure 1 shows a top plan view of a flat decorative element with plastic resin injection;
- figures from 2A to the 2E show a cross sectional view according to arrows II-II the flat decorative element of figure 1 mounted on some possible exemplary embodiments of the support according to the invention;
- figures from 3 to the 6 show a perspective view of some possible exemplary embodiments of flat decorative elements distinct from the relative supports;
- figure 7 shows a perspective view of a flat decorative element mounted on a support;
- figure 8 shows a perspective view of a plane cross section of a floor lined with the decorative elements mounted on the supports of figure 2A-2D;
- figures 9 and 10 show a perspective view of an exemplary embodiment of the support and of the decorative layer alternative to figures from 3 to the 6, respectively in a exploded configuration and in a collapsed configuration;
- figure 11 shows a cross sectional view of the decorative layer and of the relative support of figure 10, according to arrows XI-XI;
- figure 12 shows a cross sectional view of the decorative layer and of the relative support of figure 10, according to arrows XII-XII;
- figure 13 shows a perspective view of an exemplary embodiment of the support for flat decorative elements of figure 9;
- figure 14 shows a perspective view of a flat decorative element separated from the relative support according to an exemplary embodiment alternative to that shown in figures from 3 to the 6;
- figure 15 shows a perspective view of the flat decorative element of figure 14 mounted on the support;
- figure 16 shows a cross sectional view of the decorative layer and of the relative support of figure 10, according to arrows XVI-XVI;
- figure 17 shows a further exemplary embodiment of the flat decorative element of figure 1;
- figure 18 shows a perspective view of still an alternative exemplary embodiment of the flat decorative element of figure 1;
- figure 19 shows a perspective view in detail of the frame used in an exemplary embodiment of the flat decorative element of figure 18;
- figure 20 shows the flat decorative element of figure 18 in a cross sectional view according to arrows XX-XX;
- figures from 21 to 23 show a cross sectional view of some possible exemplary embodiments of moulds for plastic resin injection used to provide some of the exemplary embodiments of flat decorative elements of the invention;
- figure 24 shows a cross section of a possible exemplary embodiment of a mould for plastic resin injection that can be used to provide the support of figure 4 or 5.

### Description of a preferred exemplary embodiment

In figures from 2A to the 2E some possible exemplary embodiments are shown of a flat decorative element 10, according to the present invention. They comprise all a decorative layer 11 that in use remains exposed (figure 1). Decorative element 10 according to the invention that can be fixed to a support 1 which, during the laying steps, is fixed to the surface to coat, for example by means of nails, screws, glue for the building industry.

In particular, in some possible exemplary embodiments of the invention, in figures 2A-2B the decorative layer 11 is the upper face of decorative element 10, which is made completely as an plastic injection of resin, whereas in figures 2C-2E the decorative layer 11 is a leather layer, hide, brick-like material, metal, wood or other construction material, integrated by injection to a plastic resin layer 12, forming element 10.

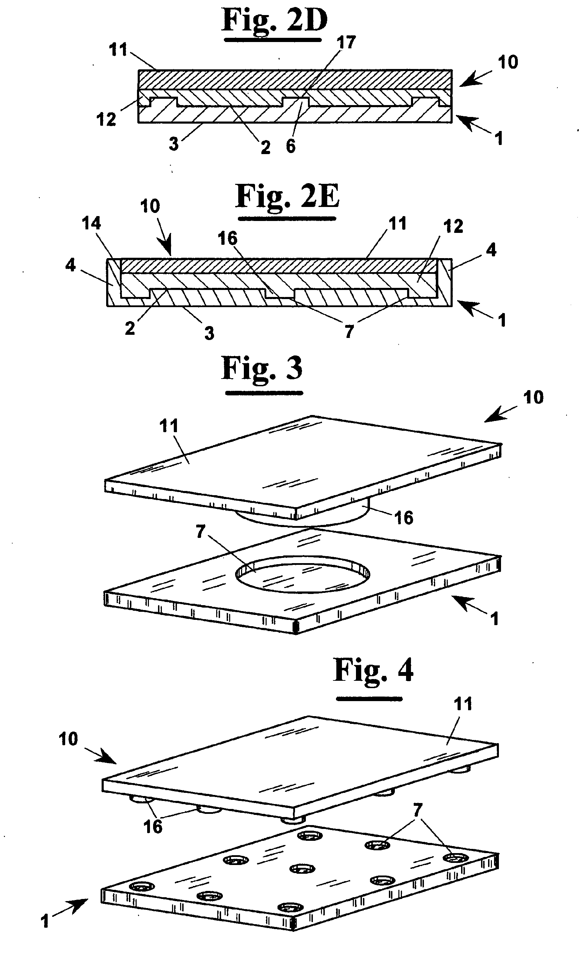

Support 1 may have a portion exceeding decorative element 10 that it has to support. In this case, the side edges 4 can embrace the side edges 14 of the decorative layer 11 for assisting the approach to other supports 1 (figure 2E).

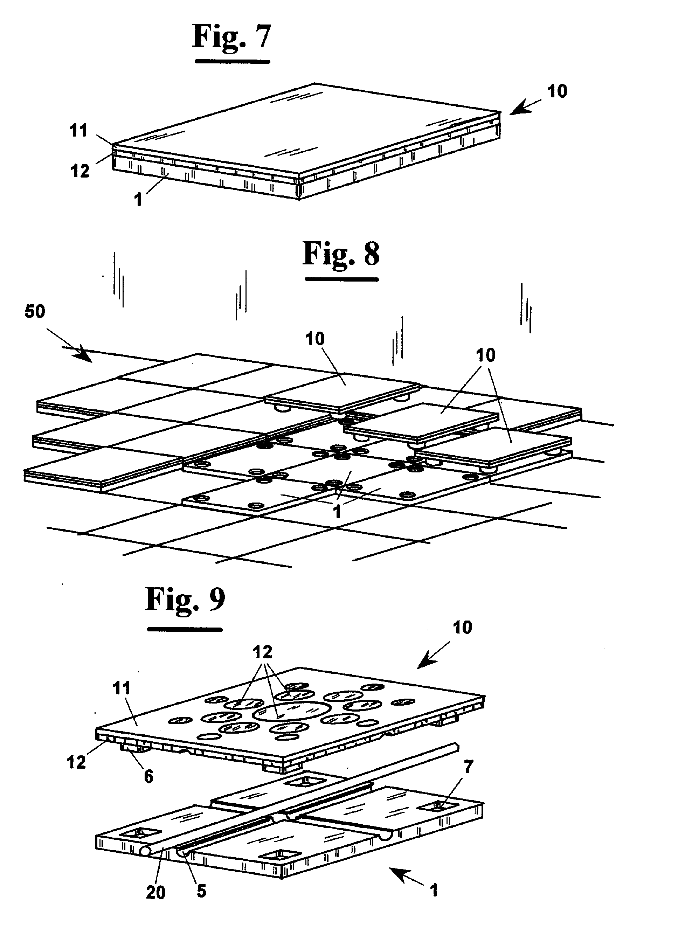

The plastic resin 12 made by injection can also extend up to surfacing the decorative layer 11 through suitable holes (figures 9-12).

The production of decorative element 10 by plastic resin injection is the main aspect of the invention. Preferably, it is plastic resin of rubber type. In figures from 21 to 24 some moulds are shown to obtain decorative element 10, and described in more detail hereinafter.

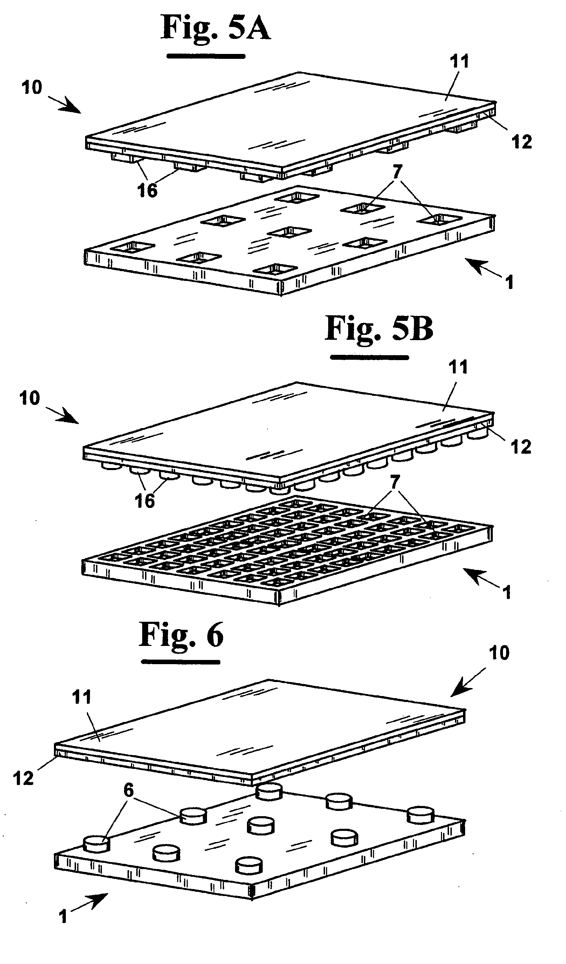

Decorative element 10 has then cooperating means with which it can be coupled to respective cooperating means made on the support 1, in order to obtain a mutual engagement. In the cases now shown, support 1 is a plane element having a first face 2 and a second face 3 opposite to the first. In particular, the first face 2, which is suitable for receiving decorative element 10, has, for example, a single recess 7 (figure 3), or a plurality of recesses 7 (figures 4, 5A, 5B), each of which is suitable for receiving a projection 16 extending from decorative element 10.

Alternatively, the surface 2 of support 1 has a projection 6 (figure 6) engageable with a recess 17 of decorative element 10. The second face 3 of support 1 in operative conditions remains on the surface to coat and is fixed to it, or snap fitted or connected by means of other systems. This way, a firm fastening is achieved of decorative element 10 to support 1 and then to the surface 50 to coat (figure 8) by a mechanism that can be easily unfastened. This allows extracting quickly decorative element 10 from the relative support 1 to provide a quick change thereof at a desired moment. The removal can be for example carried out by a suction cap.

Support 1 can be made of plastics whereby, when coupling it to a decorative element 10, the edge of each recess 7 is elastically forced by the corresponding projection 16.

As shown in figures from 3 to 6, the projections 6, or 16, depending on whether they are made respectively on support 1 or on decorative element 10, and the respective recesses 17, or 7, may have circular, square, rectangular cross section, etc. In particular, as shown in figure 5B, it is also possible to couple recesses 7, or 17, having square cross section with projections 16, or 6, with circular cross section. Furthermore, the number of recesses 7, or 17, can be higher than the number of projections 16, or 6, in order to provide the highest number of possible combinations, for example, to allow an easy matching between support 1 and decorative element 10 when at the border of the surface to coat it is necessary to reduce the size of the decorative elements 10 and of the supports 1 for completing the coating. In an exemplary embodiment of the invention, not shown in the figures, support 1 can be provided on face 2 with a combination of projections 6 and of recesses 7.

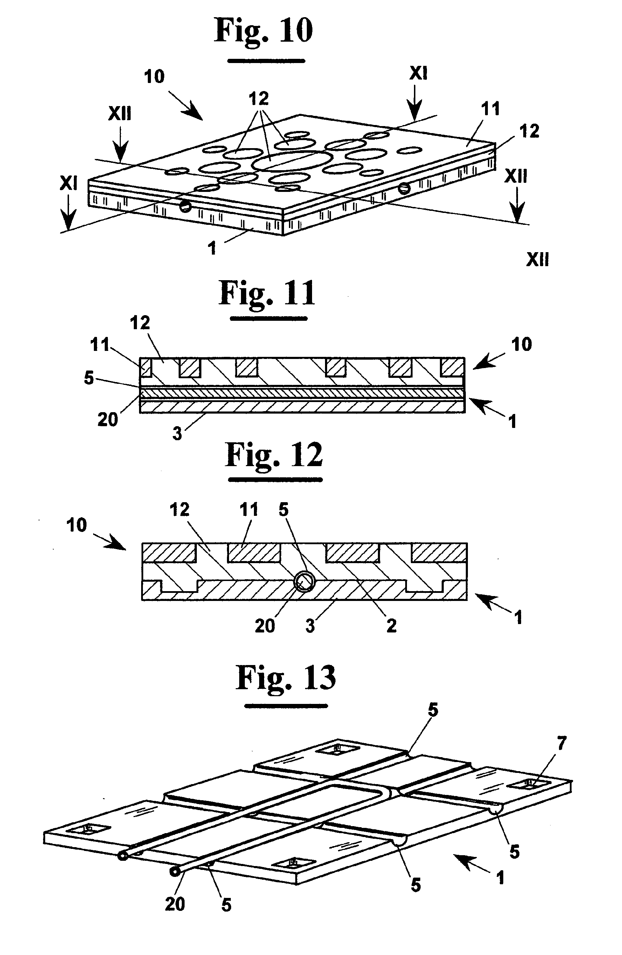

In the figures from 9 to 12 an exemplary embodiment is shown for support 1 where a groove 5 is provided that extends between two edges of support 1 same, for example, two opposite edges, in order to arrange an heating element, for example a tube 20 crossed by heating fluid, made of copper or of plastic material, connected to a heating system, or an electrical resistance, in order to carry out through the coating a ground heating. This way, it is possible to provide a very effective heat exchange owing to the wide heating surface that is eventually obtained. In the exemplary embodiment of figure 13, as shown, several grooves 5 can be made on a same support 1, in order to easily curve tube 20, or to use portions of support 1 that have enough grooves 5.

In the figures from 14 to 16 a further exemplary embodiment is shown for a decorative layer 11 alternative to that above described. In particular, in this case, the decorative element comprises decorative layer 11 to which by injection a first plastic resin layer 12 is fixed that in turn is fixed to a second plastic resin layer 13 having the projections 16 (or alternatively, the recesses), so that it can fit the recesses 7 (or alternatively, the projections), with which support 1 is equipped on the surface facing it. In particular, the first resin layer 12 is of plastic material, made by injection or other equivalent process and of different type with respect to 5 the second layer 13. This allows to optimize the final product since it is possible, for example, for a first resin layer 12 to use a more resilient material capable of adapting better to the surface of the leather layer 11 smoothing the irregularity and as second layer 13 a plastic resin with higher stiffness, much more suitable for making the elements of mutual engagement 6 and 17 so that they can be easily coupled.

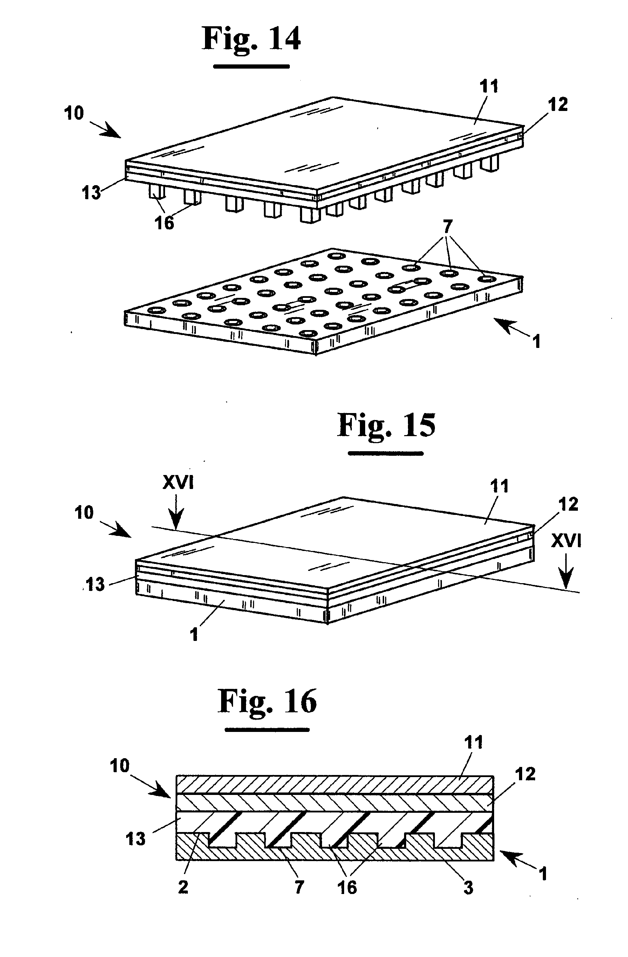

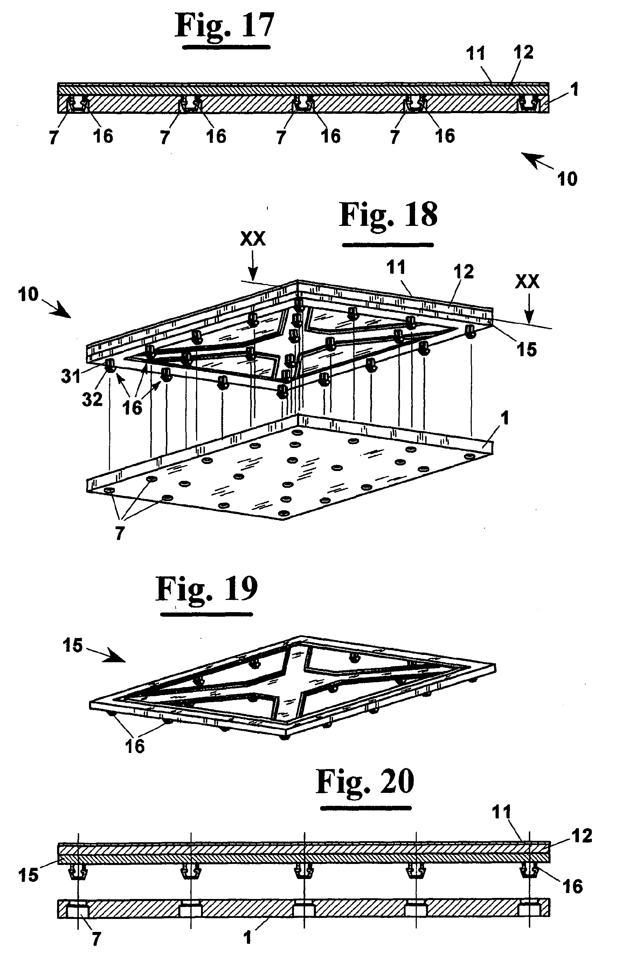

In a particular embodiment of the solutions of figures 14-16, as shown in figure 17, the projection 16 has substantially a "mushroom"-like shape, comprising a base 31, constrained directly to the resin layer 12 of decorative element 10, and a head 32, suitable for a snap engagement with the relative recess 7 of support 1, by forcing elastically its side ends.

Alternatively, a frame 15 can be made separately (figures from 18 to 20) made of stiff material with the above described mushroom-like elements 16, already incorporate thereon, suitable for being made separately and then coupled with precision in support 1. Then, the layer of plastic resin 12 made by injection is fixed to the frame 15 and to the possible decorative layer 11, forming a decorative element 10 as shown in figures 18 and 20. It is particularly advantageous, for simplicity of production and safety of matching, that it is removable in a way extremely practical and easy.

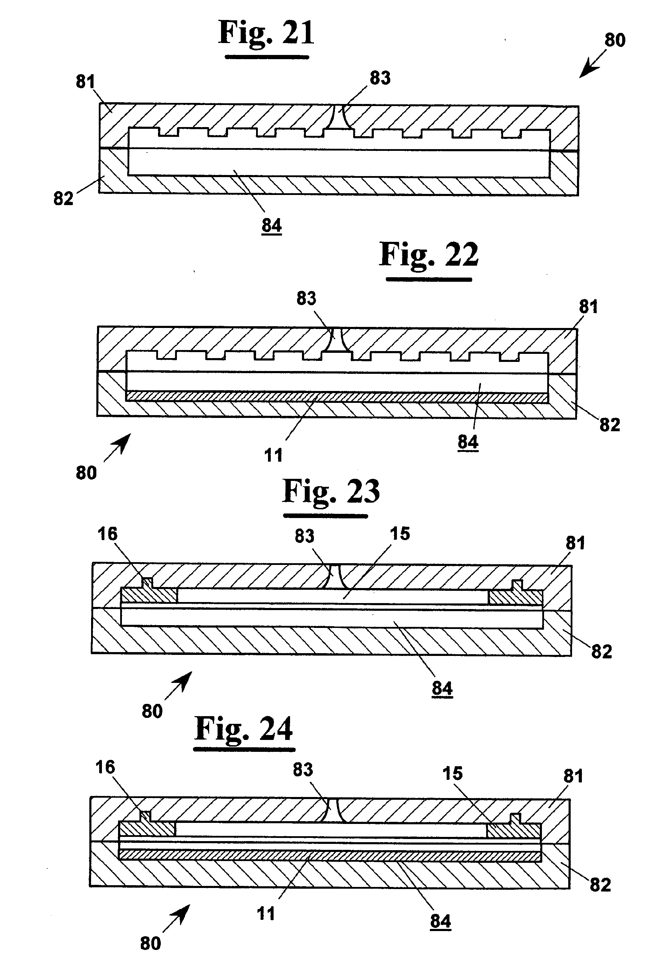

In figures from 21 to 24 moulds 80 are shown for plastic resin injection used to obtain some different exemplary embodiments of decorative element 10. In particular, the mould of figure 21 is used to obtain a decorative element 10 having only a layer of plastic resin, similar to that of figures 2A and 2B. In figure 22, instead, the addition in the mould 80 is shown of decorative layer 11 of figures 2C-2E, for fixing it to the resin layer 12 and to the cooperating means during the plastic injection moulding process that makes decorative element 10. In figure 23 a mould 80 is shown in which frame 15 is arranged, having projections 16, to which the resin layer 12 is fixed during the plastic injection (for example as in figure 17). Finally, in figure 24 a mould is shown with frame 15 and decorative layer 11 ready for injection of the resin 12 that keeps them united to obtain the decorative element of figures 18 and 20.

The resin made by injection has the advantage that, also in the presence of a decorative layer and/or of cooperating means made separately, it is capable of forming in a way not expensive and effective a single body without using glue, providing at the same time the decorative layer and the cooperating means for the fastening to the support.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Coating element for surfaces comprising:
- a support suitable for being connected to the surface to coat;
- a decorative element having cooperating means that provide a mutual engagement with relative cooperating means provided on said support;
- **characterised in that** said decorative element integrates said cooperating means by at least one resin layer made by plastic injection moulding.

2. Coating element according to claim 1, wherein said decorative element comprises a resin layer and a decorative layer, which in use is exposed, fixed to the resin layer during the same plastic injection moulding process where they are integrated to the cooperating means.

3. Coating element according to claim 1, wherein said decorative layer is made of a material selected from the group of leather, leather, brick-like material, ceramic, wood, construction material.

4. Coating element according to claim 1, wherein said cooperating means comprises at least one projection and at least one recess, whereby it is possible to provide a releasable fastening, in particular a click engagement, of the decorative element to the support and then to the surface to coat.

5. Coating element according to claim 4, wherein each projection comprises a base constrained to the layer of plastic resin, or to the support, and a head suitable for snap engagement with the relative recess of the support, or of the layer of plastic resin, forcing elastically the side ends.

6. Coating element according to claim 1, wherein said decorative element integrates the cooperating means by providing a frame, in particular of stiff material, which is at least in part embedded in the resin layer during the plastic injection co-moulding process.

7. Coating element according to claim 1, wherein said support has at least one groove that crosses it between two side edges thereof and is suitable for receiving a heating means.

8. Coating element according to claim 1, wherein said support has a portion exceeding the decorative element that it supports.

9. Coating element according to claim 1, wherein each support is associated to a plurality of supports adjacent to each other and operatively connected at the side edges in order to form a single body capable of receiving a plurality of decorative elements, said plurality of supports being easily transported rolling it up.

10. Coating element according to claim 1, wherein said decorative element comprises:
- a decorative layer in a material selected from the group of leather, stone, ceramic, wood, construction material;
- a first plastic resin layer fixed to the decorative layer;
- a second plastic resin layer fixed to the first plastic resin layer, said second plastic resin layer being of a different type from the first.

11. Coating element according to claim 1, wherein said each projection of the support or of the decorative element is separate from it and is to it fixed by a releasable coupling.

12. A method to coat a surface comprising the following steps:
- applying to the surface to coat at least one support;
- arranging on said support at least one decorative element having at least one plastic resin layer to it fastened, said support and said or each decorative element having cooperating means that provide a mutual engagement;
wherein said layer of plastic resin integrates said cooperating means in a preliminary step of plastic injection.
